# EUROPÄISCHE PATENTANMELDUNG

(11) **EP 1 193 941 A2**
(43) Veröffentlichungstag der Anmeldung: **03.04.2002**
(21) Anmeldenummer: 01122256.9
(22) Anmeldetag: 17.09.2001
(51) Int. Cl.: H04L 29/06, H04L 29/12

(54) **Vorrichtung und Verfahren zur Bereitstellung von Informationen bei einer Fehlerhaften Anfrage an einen Server in einem Datennetz**

(30) Priorität: 28.09.2000 DE 10048112
(71) Anmelder: Nutzwerk Informationsgesellschaft mbH, 04315 Leipzig (DE)
(72) Erfinder: Holzer, Réne, Dipl.-Ing., 06217 Merseburg (DE); Wonneberger, Ramona, 06116 Halle (DE)
(74) Vertreter: Köllner & Kewitz

(57) **Zusammenfassung**

Die Erfindung betrifft eine Vorrichtung und ein Verfahren zur Bereitstellung von Ersatzinformationen bei einer fehlerhaften Anfrage eines Clients an einen Server in einem Datennetz, mit einer Netzwerkschnittstelle (12), die den Datenverkehr zwischen dem Client (11) und dem Server (20) analysefähig macht, mit einer Bearbeitungseinheit (18), die den Datenverkehr auf fehlerhafte Anfragen von Clients überprüft, wobei die Antworten der Server auf die fehlerhaften Anfragen abgefangen werden und durch individuelle von der Art, dem Inhalt und/oder dem Typ der Anfrage abhängige Ersatzinformationen (19) ersetzt werden, die über die Netzwerkschnittstelle (12) an den Client (11) gesendet werden.

## Beschreibung

Die Erfindung betrifft eine Vorrichtung und ein Verfahren zur Bereitstellung von Ersatzinformationen bei einer fehlerhaften Anfrage eines Clients an einen Server in einem Datennetz.

Bei der Benutzung eines Browsers im Internet werden oftmals falsche Internet-Adressen eingegeben, wodurch Fehlermeldungen vom DNS-Server erzeugt werden. Diese Fehlermeldungen werden durch den Browser entgegengenommen, der dann eine präparierte Seite lädt. Zum Aufruf von Informationen in einem Datennetz gibt der Benutzer spezielle Adressen oder Kennungen ein. Ein Server nimmt diese Anfrage entgegen und versucht, genau diesen Anfragen zu entsprechen.
Im Internet ist TCP/IP als Übertragungsprotokoll standardisiert. Jeder Benutzer im Internet erhält eine eindeutige IP-Adresse. Da diese IP-Adresse aus Zahlenkombinationen besteht, gibt es einen Dienst im Internet, der Namen IP-Adressen zuordnet. Dieser Dienst heißt Domain-Name-Service (DNS). Der Dienst wandelt einen Namen im Internet in eine IP-Adresse um, wobei dann die IP-Adresse verwendet wird, um eine Anfrage unmittelbar an den gesuchten Server zu senden. So ist z. B. die IP-Adresse 193.45.2.34 die Adresse MICROSOFT.COM.
Dabei wird die Eingabe der Adresse MICROSOFT.COM an einen DNS-Server geschickt und dieser liefert die dazu passende IP-Adresse zurück. Erst danach wird die Verbindung zum Server ausgebaut.
Gibt nun der Benutzer eine falsche Adresse an, z. B. MCRO-SOF.COM, liefert der DNS-Server einen Fehlercode. Dieser Fehlercode wird an den Nutzer weitergereicht. Er erfährt, dass seine Anfrage nicht beantwortet werden konnte.

Neben der falschen Eingabe von Adressen kann der Benutzer auch Seiten auf Web-Servern anwählen, die entweder verschoben oder gelöscht wurden. Auch hier bekommt der Benutzer nur eine Fehlermeldung zurückgeliefert. Das gleiche trifft zu, wenn der Benutzer Seiten anwählt, für die er keine Zugriffserlaubnis besitzt.

Neben der Anwahl von Netzwerkadressen trifft diese Beschreibung auf alle im Netzwerk erreichbaren Informationen zu (Bilder, Video, Audio, Dateien etc.).

Aufgabe der vorliegenden Erfindung ist es, eine Vorrichtung und ein Verfahren bereitzustellen, das zurückgelieferte Fehlercodes herauskristallisiert, klassifiziert, um aufgrund dieser Kriterien Ersatzinformationen (z. B. Werbebanner, alternative Adressen etc.) zu schalten.

Gelöst wird diese Aufgabe durch die Merkmale der unabhängigen Ansprüche, insbesondere durch eine Vorrichtung zur Bereitstellung von Ersatzinformationen bei einer fehlerhaften Anfrage eines Clients an einen Server in einem Datennetz, mit einer Netzwerkschnittstelle, die den Datenverkehr zwischen dem Client und dem Server analysefähig macht. Aufgrund der Netzwerkschnittstelle, die im Allgemeinen eine Kombination aus einem Netzwerkadapter und einem entsprechenden Softwaretreiber ist, kann auf den Datenverkehr zugegriffen werden. Einer Bearbeitungseinheit wird es somit ermöglicht, auf den Datenverkehr zuzugreifen. Die Bearbeitungseinheit überprüft den Datenverkehr auf fehlerhafte Anfragen von Clients, wobei die Antworten der Server auf fehlerhafte Anfragen abgefangen werden und durch Ersatzinformationen ersetzt werden. Anstatt der ursprünglichen Antwort werden die Ersatzinformationen daraufhin über die Netzwerkschnittstelle an den Client gesendet.

Die Ersatzinformationen werden vorzugsweise als sinnvolle Alternative zu den fehlerhaften Anfragen ausgewählt, indem auf eine Datenbank zugegriffen wird, um entsprechende Alternativen durch eine Suchanfrage zu bestimmen. Hierbei wird vorzugsweise nach einer Ersatzinformation gesucht, die dem tatsächlichen Interesse des Benutzers entspricht. So werden z. B. Tippfehler und Buchstabenrotationen bei der Suche nach einer sinnvollen Adresse berücksichtigt. Die Ersatzinformationen sind vorzugsweise alternative Domain-Namen, alternative IP-Adressen, alternative URLs und/oder Informationen, die im Internet bereitgestellt werden, wie Werbe-Banner.

Um diese Gesuche möglichst effizient zu gestalten werden bekannte Suchmaschinen im Internet verwendet.

Der Client-Rechner ist vorzugsweise ein bekannter PC auf dem Client-Programme wie ein Web-Browser, ein FTP-Client oder ein Gopher-Client laufen. Andere Client-Programme sind jedoch denkbar.

Als Server sind vorzugsweise ein Domain-Name-Server oder ein Web-Server oder ein Server, der im Internet Informationen bereitstellt, zu nennen.

Die beschriebene Vorrichtung kann in unterschiedliche andere Vorrichtungen integriert werden. Eine Integration in einen Proxy und/oder eine Integration in einen DNS-Server (Domain-Name-Server) und/oder eine separate Integration auf dem Client-Rechner sind denkbar.

Falls aus den Antworten der Server die Anfragen der Clients nicht mehr bestimmt werden können, so werden alle Anfragen eines Clients protokolliert, um bei einer Fehlerantwort die Anfrage rekonstruieren zu können. Anfragen an eine Datenbank sind hierdurch einfach zu richten. Ersatzinformationen können somit einfach bereitgestellt werden.

Ein weiterer Bestandteil der Erfindung ist ein erfindungsgemäßes Verfahren, wie es in dem unabhängigen Verfahrensanspruch beschrieben wurde. In einem ersten Schritt wird der Datenverkehr zwischen dem Client und dem Server analysiert. In einem zweiten Schritt werden die Antworten vom Server auf fehlerhafte Anfragen von Clients abgefangen. In einem dritten Schritt werden aufgrund der Form der Anfrage bzw. der Antwort des Servers Ersatzinformationen erzeugt. In einem vierten Schritt werden die Ersatzinformationen anstatt der ursprünglichen Antwort des Servers an den Client gesandt. Hierdurch hat der Benutzer keinerlei Kenntnis von dem tatsächlichen Fehler, sondern bekommt eine Hilfestellung, wie er die richtige Adresse finden kann.

Die Ersatzinformationen werden in Abhängigkeit von der Art der Anfrage aus einer Datenbank geladen, wobei vorzugsweise Alternativen zu den fehlerhaften Anfragen geladen werden, insbesondere korrigierte Netzwerk-Adressen. Die Alternativen werden durch eine Datenbank, wie eine bekannte Suchmaschine im Internet, bestimmt.

Die Anwendung im Internet mit den entsprechenden Client-Programmen, die auf einem Client-Rechner laufen, stimmt mit den Merkmalen der Vorrichtungsansprüche überein. So können die Client-Programme ein Web-Browser, ein FTP-Client und/oder ein Gopher-Client sein.

Auch die Art der Server stimmt mit denen der Vorrichtungsansprüche überein. So handelt es sich bei den Servern um Domain-Name-Server, Web-Server oder andere Server, die im Internet Informationen bereitstellen.

Das beschriebene Verfahren kann in eine Reihe von anderen Verfahren integriert werden. Die Integration in ein Proxy-Verfahren und/oder die Integration in einen Domain-Name-Servive-Verfahren und/oder die Integration auf dem Client-Rechner sind vorstellbar.

Zur einfacheren Bereitstellung von Ersatzinformationen werden die Anfragen des Clients protokolliert, um die Fehlercodes der Server den Anfragen zuzuordnen und um Anfragen an die Datenbank zur Suche von Ersatzinformationen zu richten.

Die Ersatzinformationen sind alternative Domain-Namen, alternative IP-Adressen, alternative URLs und/oder Informationen, die im Internet bereitgestellt werden, wie Werbe-Banner. Die Zusatzinformationen können unterschiedlicher Art sein, wie Bilder, Texte, Audio, Video etc.

Vorzugsweise werden die Verfahren durch Computerprögramme realisiert, die auf herkömmlichen Servern und PCs ablaufen.

Stellt die erfindungsgemäße Vorrichtung bestimmte Fehlerkennungen im Datenstrom fest, so werden die Art des Fehlers und die gestellte Anfrage miteinander verglichen. Je nach Fehlerart können unterschiedliche Reaktionen des Filters erfolgen. Gibt der Nutzer eine falsche Internet-Adresse ein, z. B. MICROSOF.COM, wird der Fehlercode: DNS name lookup failure oder Seite nicht verfügbar, zurückgeliefert. Die erfindungsgemäße Vorrichtung fügt für den Benutzer als Ersatzinformationen z. B. eine alternative Internet-Adresse ein und lädt zusätzlich ein Werbebanner. Die alternativen Internet-Adressen werden über fehlertolerante Suchalgorithmen bestimmt. Spezielle Suchmaschinen sind im Internet vorhanden.

Sollte von einem DNS-Server eine Fehlerantwort generiert werden, so wird diese Fehlerantwort abgefangen und durch eine IP-Adresse ersetzt. Die IP-Adresse stellt die erste Ersatzinformation dar. Das Client-Programm nutzt nun diese Ersatzinformation, um den hinter dieser IP-Adresse stehenden Server anzusprechen. Dieser Ersatzserver generiert vorzugsweise anhand der IP-Adresse des Client-Rechners eine zweite Ersatzinformation. Diese zweite Ersatzinformation ist vorzugsweise eine Web-Seite, wenn das Client-Programm ein Web-Browser ist. Vorzugsweise stimmt die IP-Adresse des Ersatzservers mit der IP-Adresse des Fehler-Filters überein. Der Fehler-Filter beinhaltet somit ebenfalls einen Web-Server. Hierdurch ist es möglich, dass der Web-Server auf die Analyse des Fehler-Filters zurückgreifen kann. Insbesondere können Anfragen des Client-Rechners analysiert werden, um Kenntnis von der ursprünglichen Anfrage zu bekommen. Aufgrund der Kenntnis der Anfrage ist es möglich, individuelle zweite Ersatzinformationen zu generieren.

Weitere vorteilhafte Ausführungsformen sind in den Unteransprüchen aufgeführt. Es folgt eine detaillierte Beschreibung anhand der Zeichnungen. Es zeigt:
- **Figur 1**: ein Datennetz mit einem Fehler-Filter, der auf eine Datenbank zugreift, und der zwischen einem Web-Server und einem Client-Rechner angeordnet ist, wobei die Datenbank zusätzlich auf einen Zusatzinformations-Server zugreift
- **Figur 2**: den Ablauf eines Prozess, wie er in Figur 1 dargestellt ist.

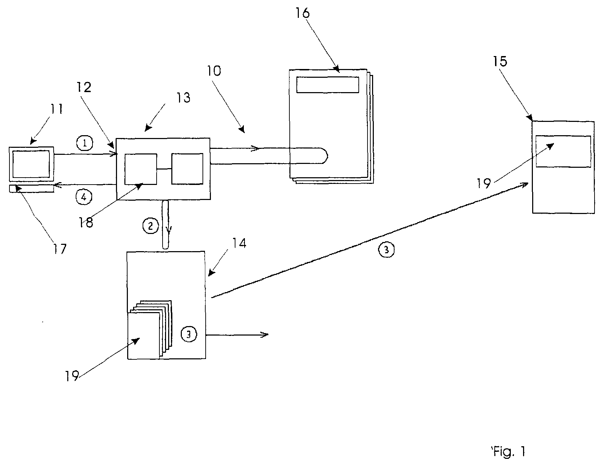

Die Figur 1 zeigt ein Datennetz 10, mit dem ein Client-Rechner 11 und ein Fehlerfilter 13 verbunden sind. Der Fehlerfilter 13 ist zwischen einem Web-Server 16 und dem Client-Rechner 11 angeordnet. Der Fehlerfilter überprüft, ob Anfragen, die vom Client-Rechner gesendet wurden, fehlerhaft sind. Falls eine fehlerhafte Anfrage festgestellt wurde, wird die Antwort des Web-Servers abgefangen und durch eine Ersatzinformation 19 ersetzt.

Die Ersatzinformation wird in der Regel durch Informationen von einer Datenbank 14 bestimmt. Die Datenbank 14 greift wiederum auf einen Zusatzinformations-Server 15 zu. Dieser Zusatzinformations-Server 15 verwaltet vorzugsweise eine Reihe von Werbe-Banner. Der Zusatzinformations-Server 15 kann jedoch auch eine bekannte Such-Maschine im Internet sein.

Der Fehler-Filter 13 weist eine Netzwerkschnittstelle 12 auf, die es ihm ermöglicht, Informationen aus dem Datennetz 10 zu lesen. Zusätzlich weist der Fehler-Filter 13 eine Bearbeitungseinheit 18 auf, die die Analysen der Anfragen und Antworten der einzelnen Beteiligten im Datennetz vornimmt.

Auf dem Client-Rechner 11 läuft vorzugsweise ein Informationsabfrageprogramm 17, das ein Web-Browser sein kann. Andere sind jedoch auch denkbar. Der Client-Rechner 11 ist vorzugsweise ein PC.

Figur 2 beschreibt im Einzelnen, wie der Prozess abläuft, der auf dem Fehler-Filter implementiert ist.

### Bezugszeichen

- 10: Datennetz (Internet)
- 11: Client-Rechner (Client-Computer)
- 12: Netzwerkschnittstelle (Network-Interface)
- 13: Fehler-Filter (Error-Scanner)
- 14: Datenbank (Data-Base)
- 15: Zusatzinformations-Server (Additional-Information-Server; Banner-Server)
- 16: Web-Server mit Web-Site
- 17: Informationsanfrageprogramm, Browser
- 18: Bearbeitungseinheit
- 19: Ersatzinformation

## Patentansprüche

1. Vorrichtung, insbesondere Proxy, zur Bereitstellung von Ersatzinformationen bei einer fehlerhaften Anfrage eines Clients (11), insbesondere eines Browser, an einen Server (20), insbesondere an einen Web-Server oder einen DNS-Server, in einem Datennetz, insbesondere dem Internet,
- mit einer Netzwerkschnittstelle (12), die den Datenverkehr zwischen dem Client (11) und dem Server (20) analysefähig macht,
- mit einer Bearbeitungseinheit (18), die den Datenverkehr auf fehlerhafte Anfragen von Clients überprüft, indem anhand von spezifischen Antworten der Server, insbesondere Fehlerantworten von DNS- oder URL-Requests, fehlerhafte Anfragen erkannt werden, wobei die fehlerhaften Antworten durch individuelle von der Art, dem Inhalt und/oder dem Typ der Anfrage abhängige Ersatzinformationen (19), insbesondere einer Auswahl von geprüften Domain-Names und URLs, ersetzt werden, die über die Netzwerkschnittstelle (12) an den Client (11) gesendet werden.

2. Vorrichtung nach dem vorhergehenden Anspruch, **dadurch gekennzeichnet, dass** die Ersatzinformationen in Abhängigkeit von der Art, dem Inhalt und/oder dem Typ der Anfrage aus einer Datenbank (14) geladen werden, insbesondere sind die Ersatzinformationen als Alternativen zu den fehlerhaften Anfragen ausgebildet, indem auf eine Datenbank zugegriffen wird, um entsprechende Alternativen durch eine Suchanfrage zu bestimmen, wobei die Datenbank vorzugsweise eine bekannte Suchmaschine im Internet ist.

3. Vorrichtung nach einem oder mehreren der vorhergehenden Ansprüche, **gekennzeichnet durch** die Anordnung im Internet, wobei der Client ein Client-Rechner ist, der vorzugsweise mit einem Client-Programm ausgestattet ist, wobei das Client-Programm vorzugsweise ein Web-Browser, ein FTP-Client und/oder ein Gopher-Client ist.

4. Vorrichtung nach einem oder mehreren der vorhergehenden Ansprüche, **dadurch gekennzeichnet, dass** der Server ein Domain-Name-Server oder ein Web-Server oder ein Server, der im Internet Informationen bereitstellt, ist.

5. Vorrichtung nach einem oder mehreren der vorhergehenden Ansprüche, **gekennzeichnet durch** die Integration in einen Proxy und/oder **durch** die Integration in einen DNS-Server (Domain-Name-Server) und/oder **durch** die Integration auf dem Client-Rechner (11).

6. Vorrichtung nach einem oder mehreren vorhergehenden Ansprüche, **dadurch gekennzeichnet, dass** die Anfragen eines Clients (11) protokolliert werden, um die Fehlercodes der Server zuzuordnen und Anfragen an die Datenbank (14) zu richten, um Ersatzinformationen bereitzustellen, wobei die Ersatzinformationen vorzugsweise alternative Domain-Namen, alternative IP-Adressen, alternative URLs und/oder Informationen sind, die im Internet bereitgestellt werden, wie Werbe-Banner.

7. Vorrichtung nach einem oder mehreren der vorhergehenden Ansprüche, **dadurch gekennzeichnet, dass** bei einer Anfrage an einen DNS-Server die Antwort auf eine fehlerhafte Anfrage durch eine IP-Adresse als erste Ersatzinformation ersetzt wird, wobei die IP-Adresse auf einen bestimmten Server verweist, der zweite individuelle Ersatzinformationen bereitstellt, wobei die individuelle zweite Ersatzinformationen von der IP-Adresse abhängen, die durch die erste Ersatzinformation bereitgestellt wurde oder wobei die individuellen zweiten Ersatzinformationen von der IP-Adresse abhängen, die der Client-Rechner aufweist.

8. Verfahren zur Bereitstellung von Ersatzinformationen bei einer fehlerhaften Anfrage eines Clients, insbesondere eines Web-Browsers, an einen Server, insbesondere einen DNS-Server oder einen Web-Server, in einem Datennetz,
- mit einem ersten Schritt, bei dem der Datenverkehr zwischen dem Client und dem Server analysiert wird, um anhand von spezifischen Antworten, insbesondere Fehlerantworten auf URL-und DNS-Requests, fehlerhafte Anfragen von Clients zu bestimmen,
- mit einem zweiten Schritt, bei dem in Abhängigkeit der Art, des Typs und/oder des Inhalts der Anfrage individuelle, alternative Ersatzinformationen, insbesondere DNS-Antworten oder URL-Antworten, erzeugt werden,
- mit einem dritten Schritt, bei dem die Ersatzinformationen anstatt der ursprünglichen Antwort des Servers an den Client gesandt werden.

9. Verfahren nach dem vorhergehenden Verfahrensanspruch, **dadurch gekennzeichnet, dass** die Ersatzinformationen in Abhängigkeit von der Art der Anfrage aus einer Datenbank geladen werden, wobei vorzugsweise Alternativen zu den fehlerhaften Anfragen geladen werden, insbesondere korrigierte Netzwerk-Adressen, wobei die Datenbank vorzugsweise eine bekannte Such-maschine im Internet ist.

10. Verfahren nach einem oder mehreren der vorhergehenden Verfahrensansprüche, **gekennzeichnet durch** die Anwendung im Internet, wobei das Client-Programm, das auf einem Client läuft, ein Web-Browser, ein FTP-Client und/oder ein Gopher-Client ist.

11. Verfahren nach einem oder mehreren der vorhergehenden Verfahrensansprüche, **dadurch gekennzeichnet, dass** der Server ein Domain-Name-Server oder ein Web-Server oder ein Server, der im Internet Informationen bereitstellt, ist.

12. Verfahren nach einem oder mehreren der vorhergehenden Verfahrensansprüche, **gekennzeichnet durch** die Integration in ein Proxy-Verfahren und/oder **durch** die Integration in einen Domain-Name-Server-Verfahren und/oder **durch** die Integration auf dem Client-Rechner .

13. Verfahren nach einem oder mehreren der vorhergehenden Verfahrensansprüche, **dadurch gekennzeichnet, dass** die Anfragen eines Clients protokolliert werden, um die Fehlercodes der Server zuzuordnen und Anfragen an die Datenbank zu richten, um Ersatzinformationen bereitzustellen, wobei die Ersatzinformationen vorzugsweise alternative Domain-Namen sind, alternative IP-Adressen, alternative URLs und/oder Informationen, die im Internet bereitgestellt werden, wie Werbe-Banner.

14. Verfahren nach einem oder mehreren der vorhergehenden Verfahrensansprüche, **dadurch gekennzeichnet, dass** bei einer Anfrage an einen DNS-Server die Antwort auf eine fehlerhafte Anfrage durch eine IP-Adresse als Ersatzinformation ersetzt wird, wobei die IP-Adresse auf einen bestimmten Server verweist, der in Abhängigkeit der Art, des Typs und/oder des Inhalts der Anfrage zweite individuelle Ersatzinformationen bereitstellt, wobei die individuellen zweiten Ersatzinformationen von der IP-Adresse abhängen, die als erste Ersatzinformation bereitgestellt werden, wobei eine Vielzahl von ersten IP-Adressen verwendet werden, oder wobei die individuellen zweiten Ersatzinformationen von der IP-Adresse abhängen, die der Client-Rechner aufweist.

15. Computerprogramm, **gekennzeichnet durch** das Verfahren nach einem oder mehreren der vorhergehenden Verfahrensansprüche.
